# EUROPÄISCHE PATENTSCHRIFT

(11) **EP 2 527 507 B1**
(45) Veröffentlichungstag und Bekanntmachung des Hinweises auf die Patenterteilung: **11.12.2013**
(21) Anmeldenummer: 11167175.6
(22) Anmeldetag: 23.05.2011
(51) Int. Cl.: D03D 1/00

(54) **Wetterschutzvorrichtung**
Weather protection device
Dispositif de protection contre les intempéries

(43) Veröffentlichungstag der Anmeldung: 28.11.2012
(73) Patentinhaber: ETTLIN AKTIENGESELLSCHAFT, 76275 Ettlingen (DE)
(72) Erfinder: Hänsch, Frauke Susanne, 76137 Karlsruhe (DE)
(74) Vertreter: Pfiz, Thomas

(56) Entgegenhaltungen:
- EP-A1- 2 284 306
- US-A- 3 417 794
- US-A1- 2003 186 606

## Beschreibung

Die Erfindung betrifft eine Wetterschutzvorrichtung mit einem eine Abschirmung gegen Witterungseinflüsse, insbesondere gegen Sonneneinstrahlung und/oder Regen bildenden textilen Flächengebilde, welches miteinander gitterartig verbundene Kettfäden und Schussfäden aufweist.

Bekannt sind Beschattungstextilien, die beispielsweise als Sonnenschirm Schutz vor Sonneneinstrahlung in Form von Wärme (IR-Strahlung) und UV-Strahlung bieten sollen. Zum Einsatz kommen hierzu in der Regel sehr dichte Leinwandgewebe, die zur besseren Reflexion der einfallenden Strahlung mit Metall (z.B. Aluminium) bedampft sein können. Den bekannten Beschattungstextilien ist gemein, dass sie aufgrund der zum Schutz erforderlichen Dichtheit bzw. der Beschichtung in der Regel luftundurchlässig sind, so dass es darunter häufig zu einem Wärmestau kommt. Als nachteilig wird auch der nach oben eingeschränkte Sichtbereich empfunden.

Eine Wetterschutzvorrichtung gemäß dem Oberbegriff des Anspruchs 1, ist aus US 3417794 bekannt.

Ausgehend hiervon liegt der Erfindung die Aufgabe zugrunde, die im Stand der Technik bekannten Vorrichtungen weiter zu verbessern und eine Schutzvorrichtung mit besseren Gebrauchseigenschaften zu schaffen.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, durch enge, spaltförmige Gitteröffnungen eine besondere Funktionalität einer Wetterschutzvorrichtung zu erreichen. Dementsprechend wird erfindungsgemäß vorgeschlagen, dass die Kettfäden und Schussfäden langgestreckt-rechteckige Gitteröffnungen begrenzen, wobei die Öffnungslänge, d.h. die lichte Weite in Längsrichtung der Gitteröffnungen, mindestens das 10-fache der Öffnungsbreite der Gitteröffnungen beträgt und wobei die Öffnungsbreite im Bereich zwischen 0,1 und 0,01 mm liegt und dass das textile Flächengebilde durch ein Hydrophobierungsmittel hydrophob ausgerüstet ist. Auf diese Weise können die Gitteröffnungen so angepasst werden, dass die Durchsicht und der Luftdurchtritt verbessert sind, während unerwünschte Strahlung und Niederschlag durch die engen Längsbegrenzungen weitgehend abgehalten werden.

Vorteilhafterweise beträgt die Öffnungsbreite zwischen 0,07 und 0,03, vorzugsweise etwa 0,06 mm, so dass Regenwasser aufgrund der Oberflächenspannung nicht hindurchtritt und die Sonnenstrahlung weitgehend reflektiert bzw. absorbiert wird.

Gemäß einer vorteilhaften Ausgestaltung der Erfindung sind die Gitteröffnungen längsseitig durch die Schussfäden begrenzt, so dass sich auch die Herstellung vereinfachen lässt.

Um eine besondere Dimensionsstabilität und Dichtheit der Gittergeometrie zu gewährleisten, ist es von Vorteil, wenn das textile Flächengebilde eine zweilagige Gewebestruktur aus eine Kettfadenlage bildenden Kettfäden und eine einseitig auf der Kettfadenlage aufliegende Schussfadenlage bildenden Schussfäden aufweist, wobei die Kettfäden und die Schussfäden im Wesentlichen geradlinig gestreckt sind. Hierbei ist es vorteilhaft, wenn die Kettfäden und die Schussfäden in Dreherbindung durch Bindefäden miteinander verbunden sind, wobei die Bindefäden die voneinander abgewandten Außenseiten der Kett- und Schussfäden umschlingen.

Für die Herstellung einer definierten Gitterstruktur ist es günstig, wenn das textile Flächengebilde aus Filamentgarnen, vorzugsweise aus monofilem Fadenmaterial gebildet ist. Alternativ ist es auch möglich, Fasergarne aus Multifilamenten zum Einsatz zu bringen.

Vorteilhafterweise besteht das textile Flächengebilde aus einem polymeren Fadenmaterial, vorzugsweise aus PET, PTFE, PVDF oder Polyacryl.

Eine weitere vorteilhafte Ausführung sieht vor, dass die Fadenstärke der Kettfäden und Schussfäden im Bereich zwischen 0,08 mm bis 0,3 mm liegt, und dass die Bindefäden eine Fadenstärke von 0,05 bis 0,1 mm aufweisen. Hierbei ist es günstig, wenn die Fadenstärke der Bindefäden etwa 50% der Fadenstärke der Grundfäden (Kett- und Schussfäden) beträgt. Damit lässt sich erreichen, dass die Dimensionen der Gitteröffnungen bei etwa 1,2 mm*0,06 mm liegen, und dass die Abdeckung durch das Fadenmaterial ca. 70% beträgt.

Um weitere Gebrauchsvorteile zu erreichen, ist es vorteilhaft, wenn das textile Flächengebilde aus einem mit Additiven zur UV-Stabilisierung und/oder zur Strahlungsabsorption versehenen, vorzugsweise dunkel eingefärbten Fadenmaterial besteht.

Für eine regenabweisende Funktion ist es von Vorteil, wenn das textile Flächengebilde durch ein Hydrophobierungsmittel, beispielsweise Fluorcarbon oder Fluorpolymere hydrophob ausgerüstet ist. Alternativ oder ergänzend lässt sich die Hydrophobierung auch durch eine geeignete Oberflächenbehandlung des Fasermaterials, beispielsweise eine Plasmabehandlung erreichen.

Vorteilhafterweise ist das textile Flächengebilde unter Freihaltung der Gitteröffnungen mit einer als UV-Filter und/oder IR-Reflektor wirkenden Beschichtung versehen. Eine schmutzabweisende Funktion kann ebenfalls durch eine geeignete Beschichtung erreicht werden.

Für eine großflächige Abschirmung ist es vorteilhaft, wenn das textile Flächengebilde in einer Spannvorrichtung insbesondere als Schirm oder Sonnensegel aufgespannt ist. Eine weitere vorteilhafte Anwendung sieht vor, dass das textile Flächengebilde mittels einer Wickelvorrichtung insbesondere als Markise ausrollbar ist.

Allgemein werden die besonderen Schutzzwecke dadurch erreicht, dass das textile Flächengebilde als Sonnen-und/oder Regenschutz an oder außerhalb von einem Gebäude unter freiem Himmel angeordnet ist.

Im Folgenden wird die Erfindung anhand des in der Zeichnung schematisch dargestellten Ausführungsbeispiels näher erläutert. Es zeigen:
- Fig. 1: eine Wetterschutzvorrichtung in Form eines an einem Gebäude aufgespannten textilen Flächengebildes in schaubildlicher Darstellung;
- Fig. 2: die lagenweise Anordnung von Kett- und Schussfäden des textilen Flächengebildes in einer kettfadenseitigen ausschnittsweisen Draufsicht;
- Fig. 3: einen Ausschnitt des textilen Flächengebildes einschließlich Bindefäden in einer schussfadenseitigen Draufsicht.

Die in der Zeichnung dargestellte Wetterschutzvorrichtung 10 umfasst ein textiles Flächengebilde 12, das als Abschirmung gegen Sonneneinstrahlung bzw. Regen außenseitig an einem Gebäude 14 aufgespannt ist. Hierfür ist das textile Flächengebilde 12 bahnförmig aus einer Wickelvorrichtung 16 ausziehbar und an seinem freien Ende an Stützen 18 fixierbar. Dabei wird ein Abschirmbereich 20 unter dem textilen Flächengebilde 12 vor direkter Sonnenstrahlung und vor Regen geschützt.

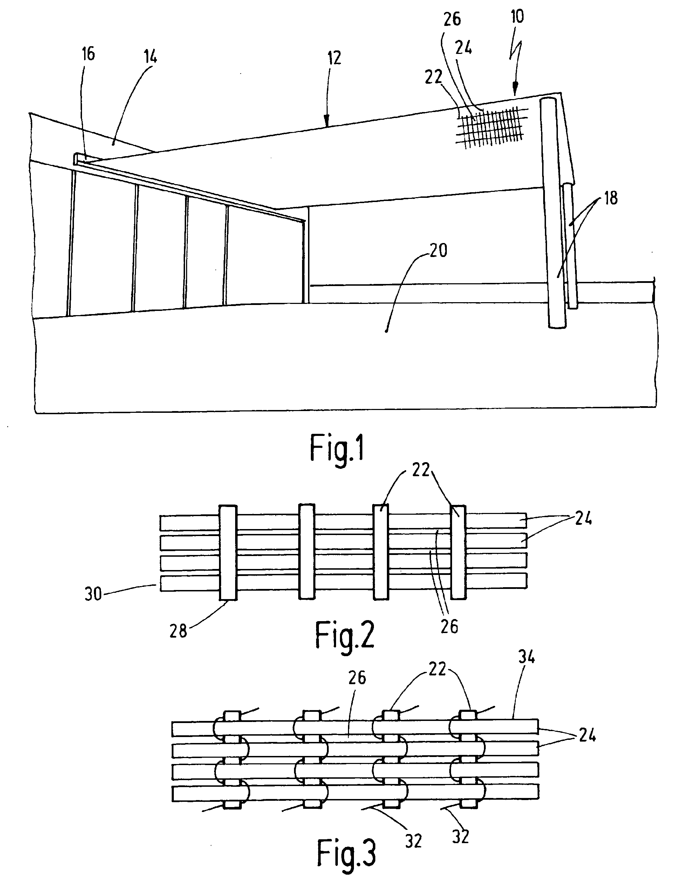

Wie in Fig. 1 nicht maßstäblich angedeutet, weist das textile Flächengebilde gitterartig miteinander verbundene Kettfäden 22 und Schussfäden 24 auf. Die Kettfäden 22 verlaufen mit relativ großem gegenseitigem Fadenabstand in Längsrichtung der Gewebebahn, während die Schussfäden 24 unter Einhaltung eines relativ engen gegenseitigen Fadenabstandes die Kettfäden 22 rechtwinklig kreuzen. Auf diese Weise werden in dem gitterförmigen Flächengebilde 12 langgestreckt-rechteckige Gitteröffnungen 26 freigehalten, die eine gewisse Durchsichtigkeit und Luftdurchlässigkeit gewähren, wohingegen ein Durchdringen von Regen durch die engen Spalte weitgehend verhindert wird.

Wie in Fig. 2 veranschaulicht, weist das textile Flächengebilde eine zweilagige Gewebestruktur auf, in der die Kettfäden 22 und Schussfäden 24 geradlinig gestreckt sind und jeweils eine eigene ebene Fadenlage bilden. Die Kettfadenlage 28 liegt somit einseitig auf der Schussfadenlage 30 auf, wobei die Kettfadenlage 28 die dem Abschirmbereich 20 zugewandte Gewebeunterseite und die Schussfadenlage 30 die nach oben gerichtete Gewebeoberseite bildet.

In Richtung der Flächennormalen des textilen Flächengebildes 12 gesehen ergeben sich somit lichte Gitteröffnungen 26, die längsseitig durch die Schussfäden 24 und breitseitig durch die Kettfäden 22 begrenzt sind. Die Öffnungslänge der Gitteröffnungen 26, d.h. der lichte Abstand zwischen den einander zugewandten Kettfadenkanten, beträgt dabei mindestens das 10-fache der Öffnungsbreite zwischen den einander zugewandten Schussfadenkanten, wobei die öffnungsbreite aufgrund der hohen Schussfadendichte kleiner als 0,07 mm ist und bevorzugt 0,06 mm beträgt. Die Kettfadendichte ist deutlich geringer als die Schussfadendichte, der Abstand von Fadenmitte zu Fadenmitte liegt hier zwischen 0,5 mm und 5 mm. Die Abstände unterliegen dabei geringen Toleranzen, die sich durch Abweichungen im Fadendurchmesser und in der Webgenauigkeit ergeben.

Wie in Fig. 3 gezeigt, werden die Kettfäden 22 und Schussfäden 24 durch dünne Bindefäden 32 nach Art einer Dreherbindung in ihrer gegenseitigen Lage fixiert. Die Bindefäden 32 durchqueren dabei die beiden Fadenlagen der Kett- und Schussfäden und umschlingen deren voneinander abgewandte Außenseiten.

Zweckmäßig bestehen die Kett-, Schuss- und Bindefäden aus einem monofilen, polymeren Fadenmaterial, beispielsweise aus PET. Den Fäden sind Additive zur UV-Stabilisierung und zur Strahlungsabsorption zugesetzt. Das Fadenmaterial hat eine dunkle Farbe, z.B. schwarz. Die Fadenstärken der Kett- und Schussfäden 22, 24 liegen im Bereich zwischen 0,08 bis 0,3 mm, während die dünneren Bindefäden 32 eine Stärke von 0,05 bis 0,1 mm besitzen.

Aufgrund der angegebenen Fadendichten entsteht ein dichtes Flächengebilde 12 mit eindimensional großen Gitteröffnungen 26. Die Schussfäden 24 sorgen für die dichte Oberfläche, während aufgrund der geringen Kettdichte die spaltförmigen Zwischenräume 26 zwischen den Schussfäden 24 freibleiben. Die Öffnungsgröße und -form ermöglichen einen hinreichenden Luftdurchtritt, wohingegen aufgrund des geringen Schussfadenabstandes der Wasserdurchtritt nicht möglich ist. Zur Unterstützung wird das textile Flächengebilde 12 hydrophob ausgerüstet, so dass auch mit Kraft auftreffende Wassertropfen nicht durchtreten können.

Die Beschattungs- bzw. Sonnenschutzfunktion wird über die Reflexion an den Fadenoberflächen erreicht. Um zu vermeiden, dass zwischen den Fäden 22, 24 reflektierte Strahlung durch das Flächengebilde 12 hindurchtritt, werden dem Fadenmaterial strahlungsabsorbierende Additive zugegeben und die Fläche selbst wird ohne Verschluss der Gitteröffnungen 26 beschichtet. Die Beschichtung 34 enthält UV-Filter oder auch IR-Reflektoren. Der Schutzgrad des textilen Flächengebildes 12 insgesamt kann über die Schussfadendichte und damit die Fadenabstände und über die Fadendurchmesser eingestellt werden. Grundsätzlich ist auch eine zonenweise Variation der Fadendichten und Fadenstärken möglich, um die Schutzfunktionen entsprechend zu modifizieren.

Für die genannten Wetterschutzfunktionen bestehen vielfältige Einsatzmöglichkeiten, beispielsweise auch als Schirm oder Sonnensegel. Das Textilmaterial kann mittels einer Spann- oder Wickelvorrichtung platzsparend gefaltet oder aufgewickelt werden. Grundsätzlich ist auch eine permanente Aufspannung denkbar, insbesondere auch als Fassadenverkleidung an einem Gebäude.

## Patentansprüche

1. Wetterschutzvorrichtung mit einem eine Abschirmung gegen Witterungseinflüsse, insbesondere gegen Sonneneinstrahlung und/oder Regen bildenden textilen Flächengebilde (12), welches miteinander gitterartig verbundene Kettfäden (22) und Schussfäden (24) aufweist, **dadurch gekennzeichnet, dass** die Kettfäden (22) und Schussfäden (24) langgestrecktrechteckige Gitteröffnungen (26) begrenzen, wobei deren Öffnungslänge mindestens das 10-fache von deren Öffnungsbreite beträgt und wobei die Öffnungsbreite im Bereich zwischen 0,1 und 0,01 mm liegt, und dass das textile Flächengebilde (12) durch ein Hydrophobierungsmittel hydrophob ausgerüstet ist.

2. Wetterschutzvorrichtung nach Anspruch 1, **dadurch gekennzeichnet, dass** die Öffnungsbreite zwischen 0,07 und 0,03, vorzugsweise etwa 0,06 mm beträgt.

3. Wetterschutzvorrichtung nach Anspruch 1 oder 2, **dadurch gekennzeichnet, dass** die Gitteröffnungen (26) längsseitig durch die Schussfäden (24) begrenzt sind.

4. Wetterschutzvorrichtung nach einem der Ansprüche 1 bis 3, **dadurch gekennzeichnet, dass** das textile Flächengebilde (12) eine zweilagige Gewebestruktur aus eine Kettfadenlage bildenden Kettfäden (22) und eine einseitig auf der Kettfadenlage aufliegende Schussfadenlage bildenden Schussfäden (24) aufweist, wobei die Kettfäden (22) und die Schussfäden (24) im Wesentlichen geradlinig gestreckt sind.

5. Wetterschutzvorrichtung nach einem der Ansprüche 1 bis 4, **dadurch gekennzeichnet, dass** die Kettfäden (22) und die Schussfäden (24) in Dreherbindung durch Bindefäden (32) miteinander verbunden sind, wobei die Bindefäden (32) die voneinander abgewandten Außenseiten der Kett- und Schussfäden (24) umschlingen.

6. Wetterschutzvorrichtung nach einem der Ansprüche 1 bis 5, **dadurch gekennzeichnet, dass** das textile Flächengebilde (12) aus Filamentgarnen, vorzugsweise aus monofilem Fadenmaterial gebildet ist.

7. Wetterschutzvorrichtung nach einem der Ansprüche 1 bis 6, **dadurch gekennzeichnet, dass** das textile Flächengebilde (12) aus einem polymeren Fadenmaterial, vorzugsweise aus PET, PTFE, PVDF oder Polyacryl besteht.

8. Wetterschutzvorrichtung nach einem der Ansprüche 1 bis 7, **dadurch gekennzeichnet, dass** die Fadenstärke der Kettfäden (22) und Schussfäden (24) im Bereich zwischen 0,08 mm bis 0,3 mm liegt.

9. Wetterschutzvorrichtung nach einem der Ansprüche 5 bis 8, **dadurch gekennzeichnet, dass** die Bindefäden (32) eine Fadenstärke von 0,05 bis 0,1 mm aufweisen.

10. Wetterschutzvorrichtung nach einem der Ansprüche 1 bis 9, **dadurch gekennzeichnet, dass** das textile Flächengebilde (12) aus einem mit Additiven zur UV-Stabilisierung und/oder zur Strahlungsabsorption versehenen, vorzugsweise dunkel eingefärbten Fadenmaterial besteht.

11. Wetterschutzvorrichtung nach einem der Ansprüche 1 bis 10, **dadurch gekennzeichnet, dass** das textile Flächengebilde (12) unter Freihaltung der Gitteröffnungen (26) mit einer als UV-Filter und/oder IR-Reflektor wirkenden Beschichtung (34) versehen ist.

12. Wetterschutzvorrichtung nach einem der Ansprüche 1 bis 11, **dadurch gekennzeichnet, dass** das textile Flächengebilde (12) in einer Spannvorrichtung insbesondere als Schirm oder Sonnensegel aufgespannt ist.

13. Wetterschutzvorrichtung nach einem der Ansprüche 1 bis 12, **dadurch gekennzeichnet, dass** das textile Flächengebilde (12) mittels einer Wickelvorrichtung (16) insbesondere als Markise ausrollbar ist.

14. Wetterschutzvorrichtung nach einem der Ansprüche 1 bis 13, **dadurch gekennzeichnet, dass** das textile Flächengebilde (12) als Sonnen- und/oder Regenschutz an oder außerhalb von einem Gebäude (14) unter freiem Himmel angeordnet ist.

## Claims

1. Weather protection device having a textile sheet-like material (12) which forms a shielding against weather influences, in particular against solar radiation and/or rain, and has warp threads (22) and weft threads (24) connected to one another in the manner of a grid, **characterized in that** the warp threads (22) and weft threads (24) delimit elongate-rectangular grid openings (26), the opening length of said grid openings (26) amounting to at least ten times the opening width of said grid openings and the opening width being in the range between 0.1 mm and 0.01 mm, and **in that** the textile sheet-like material (12) is finished with a waterproofing agent so as to be hydrophobic.

2. Weather protection device according to Claim 1, **characterized in that** the opening width is between 0.07 and 0.03, preferably about 0.06 mm.

3. Weather protection device according to Claim 1 or 2, **characterized in that** the grid openings (26) are delimited on the longitudinal sides by the weft threads (24).

4. Weather protection device according to one of Claims 1 to 3, **characterized in that** the textile sheet-like material (12) has a two-layered fabric structure of warp threads (22) which form a warpthread layer, and of weft threads (24) which form a weft-thread layer lying on one side of the warpthread layer, the warp threads (22) and the weft threads (24) being stretched in a substantially rectilineal manner.

5. Weather protection device according to one of Claims 1 to 4, **characterized in that** the warp threads (22) and the weft threads (24) are connected to one another by binder threads (32) in a leno weave, the binder threads (32) wrapping around the outer sides, which face away from one another, of the warp and weft threads (24).

6. Weather protection device according to one of Claims 1 to 5, **characterized in that** the textile sheet-like material (12) is formed from filament yarns, preferably from monofilament yarn material.

7. Weather protection device according to one of Claims 1 to 6, **characterized in that** the textile sheet-like material (12) is composed of a polymer thread material, preferably of PET, PTFE, PVDF or polyacrylic.

8. Weather protection device according to one of Claims 1 to 7, **characterized in that** the thread thickness of the warp threads (22) and weft threads (24) lies in the range between 0.08 mm and 0.3 mm.

9. Weather protection device according to one of Claims 5 to 8, **characterized in that** the binder threads (32) have a thread thickness of 0.05 to 0.1 mm.

10. Weather protection device according to one of Claims 1 to 9, **characterized in that** the textile sheet-like material (12) is composed of a preferably dark coloured thread material which is provided with additives for UV stabilization and/or for radiation absorption.

11. Weather protection device according to one of Claims 1 to 10, **characterized in that** the textile sheet-like material (12) is provided with a coating (34) which acts as UV filter and/or IR reflector, the grid openings (26) being kept free.

12. Weather protection device according to one of Claims 1 to 11, **characterized in that** the textile sheet-like material (12) is stretched out, in particular as an umbrella or parasol, in a tensioning device.

13. Weather protection device according to one of Claims 1 to 12, **characterized in that** the textile sheet-like material (12) is unrollable, in particular as an awning, by means of a winding device (16).

14. Weather protection device according to one of Claims 1 to 13, **characterized in that** the textile sheet-like material (12) is located in the open air as sun protection and/or rain protection on or outside a building (14).

## Revendications

1. Dispositif de protection contre les influences météorologiques, présentant un produit plat textile (12) qui forme un écran contre les influences météorologiques, en particulier contre le rayonnement solaire et/ou la pluie, le produit plat présentant des fils de chaîne (22) et des fils de trame (24) reliés mutuellement en grille, **caractérisé en ce que**
les fils de chaîne (22) et les fils de trame (24) délimitent des ouvertures rectangulaires allongées (26) de grille, la longueur des ouvertures représentant au moins 10 fois la largeur des ouvertures et la largeur des ouvertures étant de l'ordre de 0,1 à 0,01 mm et
**en ce que** le produit plat textile (12) est rendu hydrophobe par un agent d'hydrophobisation.

2. Dispositif de protection contre les influences météorologiques selon la revendication 1, **caractérisé en ce que** la largeur des ouvertures est comprise entre 0,07 et 0,03 mm et vaut de préférence environ 0,06 mm.

3. Dispositif de protection contre les influences météorologiques selon les revendications 1 ou 2, **caractérisé en ce que** les ouvertures (26) de grille sont délimitées dans le sens de leur longueur par les fils de trame (24).

4. Dispositif de protection contre les influences météorologiques selon l'une des revendications 1 à 3, **caractérisé en ce que** le produit plat textile (12) présente une structure tissée en deux couches constituée de fils de chaîne (22) formant une couche de fils de chaîne et de fils de trame (24) formant une couche de fils de trame appliquée d'un côté de la couche de fils de chaîne, les fils de chaîne (22) et les fils de trame (24) étant étirés essentiellement en ligne droite.

5. Dispositif de protection contre les influences météorologiques selon l'une des revendications 1 à 4, **caractérisé en ce que** les fils de chaîne (22) et les fils de trame (24) sont reliés mutuellement par des fils de liaison (32) dans une liaison rotative, les fils de liaison (32) entourant les côtés extérieurs non tournés l'un vers l'autre des fils de chaîne et des fils de trame (24).

6. Dispositif de protection contre les influences météorologiques selon l'une des revendications 1 à 5, **caractérisé en ce que** le produit plat textile (12) est formé de filaments de préférence d'un matériau monofil.

7. Dispositif de protection contre les influences météorologiques selon l'une des revendications 1 à 6, **caractérisé en ce que** le produit plat textile (12) est constitué d'un matériau de fil polymère, de préférence de PET, de PTFE, de PVDF ou de polyacryle.

8. Dispositif de protection contre les influences météorologiques selon l'une des revendications 1 à 7, **caractérisé en ce que** l'épaisseur des fils de chaîne (22) et des fils de trame (24) est située dans la plage de 0,08 mm à 0,3 mm.

9. Dispositif de protection contre les influences météorologiques selon l'une des revendications 5 à 8, **caractérisé en ce que** les fils de liaison (32) ont une épaisseur de 0,05 à 0,1 mm.

10. Dispositif de protection contre les influences météorologiques selon l'une des revendications 1 à 9, **caractérisé en ce que** le produit plat textile (12) est constitué d'un matériau de fil doté d'additifs de protection contre les UV et/ou d'absorption du rayonnement, de préférence de teinte sombre.

11. Dispositif de protection contre les influences météorologiques selon l'une des revendications 1 à 10, **caractérisé en ce que** le produit plat textile (12) est doté d'un revêtement (34) qui agit comme filtre à UV et/ou comme réflecteur d'IR sans obstruer les ouvertures (26) de grille.

12. Dispositif de protection contre les influences météorologiques selon l'une des revendications 1 à 11, **caractérisé en ce que** le produit plat textile (12) est tendu dans un dispositif de tension, en particulier comme écran ou pare-soleil.

13. Dispositif de protection contre les influences météorologiques selon l'une des revendications 1 à 12, **caractérisé en ce que** le produit plat textile (12) peut être enroulé en particulier comme marquise au moyen d'un dispositif d'enroulement (16).

14. Dispositif de protection contre les influences météorologiques selon l'une des revendications 1 à 13, **caractérisé en ce que** le produit plat textile (12) est disposé à l'air libre comme protection contre le soleil et/ou la pluie sur ou à l'extérieur d'un bâtiment (14).
